# EUROPEAN PATENT APPLICATION

(11) **EP 3 832 855 A1**
(43) Date of publication of application: **09.06.2021**
(21) Application number: 19857303.2
(22) Date of filing: 03.07.2019
(51) Int. Cl.: H02K 5/20, H02K 9/19

(54) **MOTOR HOUSING WITH LEAK-FREE FLUID CHANNELS EMBEDDED THEREIN**

(30) Priority: 07.09.2018 KR 20180107107
(71) Applicant: MH Technologies Inc., Incheon 21990 (KR)
(72) Inventor: YOO, Jin-Ho, Seoul 05698 (KR)
(74) Representative: Isarpatent
(86) International application number: PCT/KR2019/008111
(87) International publication number: WO 2020/050483

(57) **Abstract**

The present invention relates to a motor housing comprising fluid channels, in which leak-free fluid channels are embedded in the longitudinal direction of the motor housing, wherein at least one of the leak-free fluid channels is provided as a cooling fluid channel through which a cooling fluid flows.

## Description

### Technical Field

The present invention relates to a motor housing including fluid channels and, more particularly, to a motor housing in which leak-free fluid channels are embedded in a longitudinal direction of the motor housing, and at least one of the leak-free fluid channels is provided as a cooling fluid channel through which a cooling fluid flows.

### Background Art

In general, electric vehicles (EVs) denote vehicles in which an AC motor or a DC motor is mainly driven using power of a battery, and thus motive power is obtained. EVs are roughly divided into battery electric vehicles and hybrid electric vehicles, which are well known to a person having ordinary knowledge in the art to which the present invention pertains (hereinafter "person having ordinary skill in the art"). Here, the battery is not limited to a nickel cadmium battery, a nickel hydrogen battery, a lithium-based battery, a fuel cell, or the like, and can be usually regarded as including any energy storage device capable of supplying electric power to a motor generating motive power.

A motor that is a main part in these vehicles converts electrical energy into rotational energy, and includes a housing, a stator that is mounted in the housing, and a rotor that is inserted into the stator to be rotatable about a rotary shaft thereof.

Meanwhile, the motor is subjected to generation of high-temperature heat from the rotor and the stator in the operating process. If a temperature of coils inside the motor is increased in this way, there are concerns about a sharp reduction in driving and power generation efficiency of the motor as well as damage to parts. A motive power loss is caused by a sharp reduction in the driving and power generation efficiency of the motor, which may serve as a factor of reducing the efficiency of a relevant application power system.

To prevent this problem, the motor is configured to be cooled to be able to maintain high driving torque and efficiency thereof. So far, a technique for separately casting an inner housing and an outer housing and press-fitting and sealing or welding the inner housing and the outer housing such that a cooling channel is provided between the inner housing and the outer housing has been mainly applied.

However, the conventional cooling technique of the motor has a problem in that a cooling fluid leaks out to reduce cooling efficiency while a mating gap is generated between the inner housing and the outer housing, and thermal crosstalk is generated while fluid channels of input and output stages are disposed to cross each other due to a low degree of freedom in design of the fluid channels.

### [Prior Art Document]

### [Patent Document]

(Patent Document 1) Japanese Registered Patent No. 5613453
(Patent Document 2) Korean Patent Publication No. 10-2016-0047809
(Patent Document 3) US Registered Patent No. 7965002

### Summary of Invention

### Technical Problem

The present invention is directed to providing a motor housing in which leak-free cooling fluid channels, which can increase a cooling effect, implement complete sealing of fluid channels, and prevent a thermal crosstalk phenomenon, are embedded.

Further, the present invention is directed to providing a motor housing in which cooling fluid channels can be stably molded and pore defects capable of occurring on a coupling surface to which a stator is coupled are minimized.

### Solution to Problem

In order to achieve the above objects, a motor housing according to an embodiment of the present invention is a motor housing including at least one leak-free fluid channel,

wherein an inner support, which has a circular structure for accommodating a stator in the inner support and into which a high-pressure die casting core including the leak-free fluid channels in an outer surface of the inner support in a helical shape is integrated, is embedded, and at least one of the leak-free fluid channels is provided as a cooling fluid channel through which a cooling fluid flows.

Here, a helical seating recess for guiding the winding of the high-pressure die casting core may be formed in the outer surface of the inner support.

Further, the stator or a rotor may be inserted into the inner support, and a cover may be fixed to an upper surface of the motor housing.

A motor housing according to another modifiable embodiment of the present invention includes:
an inner support having a circular structure for accommodating a stator therein; and
a high-pressure die casting core that includes one or more leak-free fluid channels and is integrally wound around an outer surface of the inner support in a helical shape.

### Advantageous Effects of Invention

A motor housing including leak-free fluid channels according to the present invention provides the following effects.
First, complete sealing of fluid channels can be realized with no leakage of a cooling fluid, for instance air, and thus cooling performance can be maintained and improved.
Second, in the related art, due to separate post-processing after die casting, sealing work including components relevant to sealing, and so on, a process is complicated, and manufacturing costs are high. In contrast, according to the present invention, an extruded pipe is processed and used as a die casting core, and thereby is insert-injected into a die for the motor housing. For this reason, production time can be reduced and manufacturing costs can be reduced, and thus it is productive.
Third, unlike the related art in which a cooling effect is reduced because a region of a cooling fluid is narrow and inlets and outlets of the cooling fluid are on the same line, the present invention separates the positions of inlets and outlets of the cooling fluid, and thus it is possible to improve a cooling effect.
Fourth, in a motor housing manufacturing method according to an embodiment of the present invention, because a high-pressure die casting process is performed after a high-pressure die casting core is integrally wound around an outer surface of an inner support manufactured to have high density, there is an advantage in that helical cooling fluid channels are stably molded. Further, as pore defects that can occur on an inner surface of the inner support, i.e. a coupling surface to which a stator is coupled, are minimized, there is an advantage in that a material defect rate of the motor housing can be remarkably reduced.

### Brief Description of Drawings

FIG. 1 is a perspective view of a motor housing according to an embodiment of the present invention.
FIGS. 2A and 2B are a top view and a bottom view of the motor housing illustrated in FIG. 1, respectively.
FIGS. 3A and 3B are a left side view and a right side view of the motor housing illustrated in FIG. 1, respectively.
FIGS. 4A and 4B are a front view and a rear view of the motor housing illustrated in FIG. 1, respectively.
FIG. 5 is a sectional view taken along line A-A of the motor housing illustrated in FIG. 2A.
FIG. 6 is a sectional view taken along line B-B of the motor housing illustrated in FIG. 4A.
FIG. 7 is an exploded perspective view illustrating components used to manufacture the motor housing illustrated in FIG. 1.
FIG. 8 is a perspective view illustrating an example of a high-pressure die casting core used for the motor housing of the present invention.
FIG. 9 is a perspective view illustrating another example of the high-pressure die casting core used for the motor housing of the present invention.
FIG. 10 is a view illustrating an example of a shape of an inner support 150 used to manufacture a motor housing according to another embodiment of the present invention.

### Detailed Description of Embodiment

Hereinafter, exemplary embodiments of the present invention will be described with reference to the attached drawings. However, some components irrelevant to the gist of the invention may be omitted or compacted. The omitted components are not necessarily components that are unnecessary in the present invention, and can be used in combination by a person having ordinary knowledge in the art to which the present invention pertains.

### <Embodiment of motor housing>

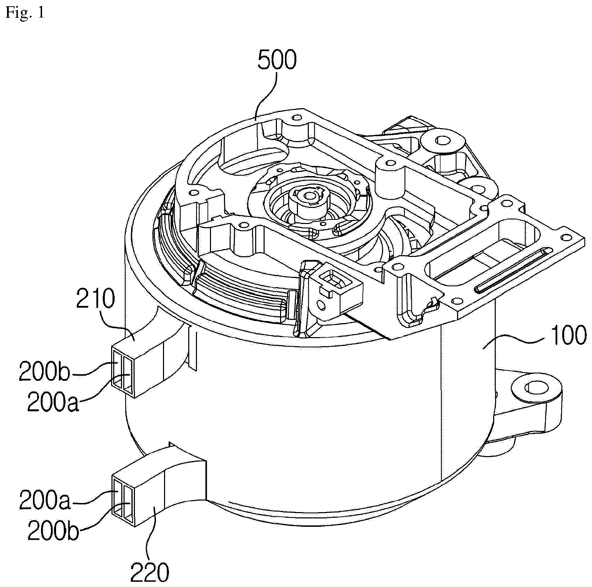

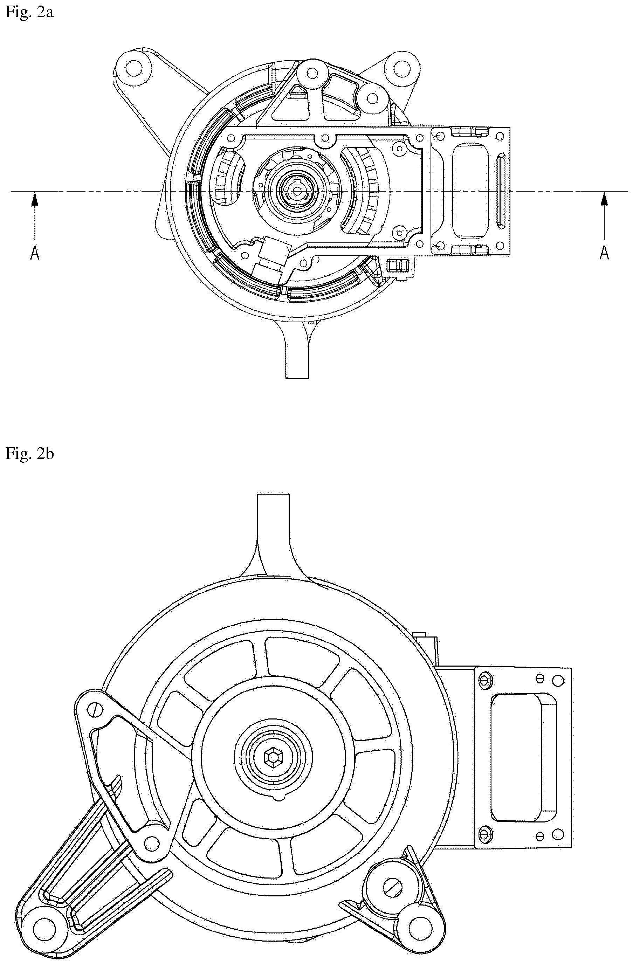

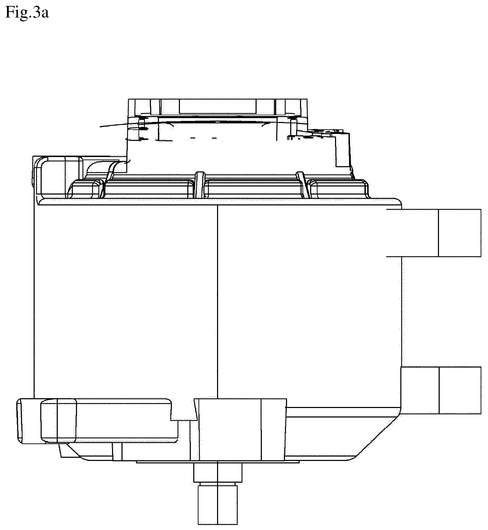

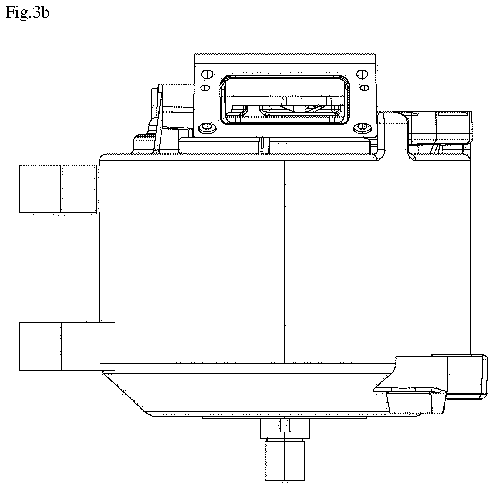

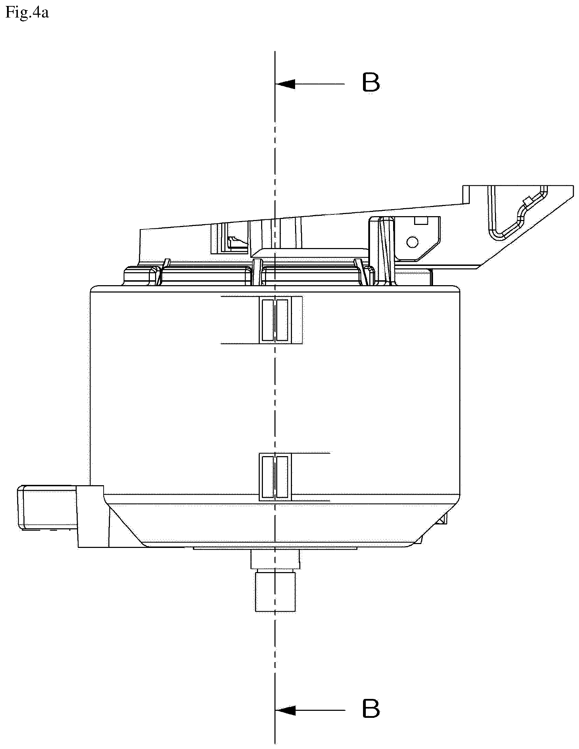

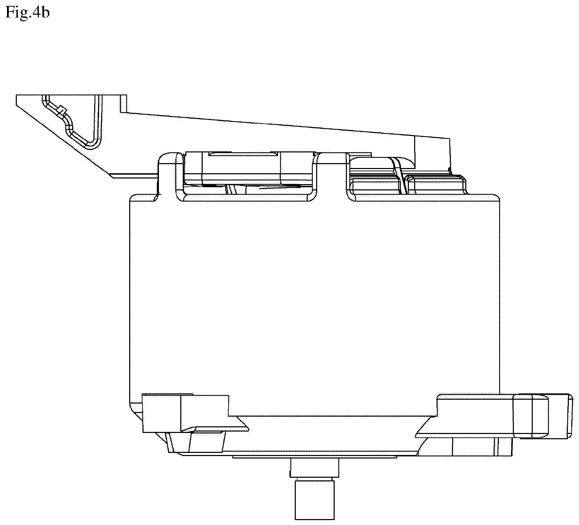

FIG. 1 is a perspective view of a motor housing according to an embodiment of the present invention. FIGS. 2A and 2B are a top view and a bottom view of the motor housing illustrated in FIG. 1, respectively. FIGS. 3A and 3B are a left side view and a right side view of the motor housing illustrated in FIG. 1, respectively. FIGS. 4A and 4B are a front view and a rear view of the motor housing illustrated in FIG. 1, respectively.

As illustrated in FIGS. 1 to 4B, a motor housing 100 according to an embodiment of the present invention includes leak-free fluid channels 200.

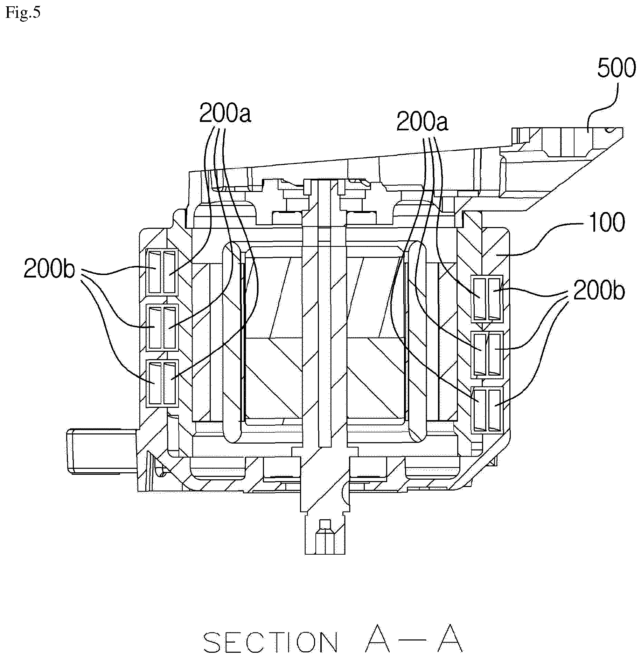

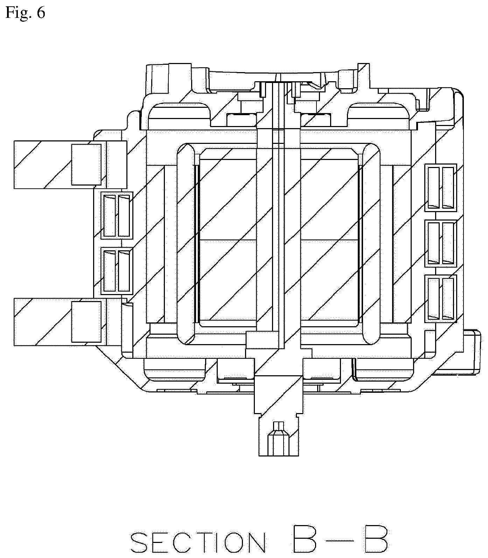

FIG. 5 is a sectional view taken along line A-A of the motor housing illustrated in FIG. 2A, and FIG. 6 is a sectional view taken along line B-B of the motor housing illustrated in FIG. 4A. As can be seen from FIGS. 5 and 6 illustrated by way of example, the leak-free fluid channels 200 are embedded in a helical shape in a longitudinal directional of the motor housing 100. This is to increase a cooling effect on the motor housing, and the leak-free fluid channels may be circumferentially wound along an inner circumference of the motor housing 100 in a right- or left-hand thread direction, and stacked at a set interval (pitch) in a longitudinal direction or a height direction of the motor housing 100.

As illustrated in FIGS. 1 to 6, the fluid channels 200 may be configured as dual fluid channels. The dual leak-free fluid channels 200 include an inner channel 200a and an outer channel 200b, of which, the inner channel 200a is provided as a cooling fluid channel such that a cooling fluid thereof flows. An accommodation space 101 of the motor housing 100 is cooled by the flow of the cooling fluid. The outer channel 200b may be applied for another purpose.

Two channel ports 210 and 220 illustrated in FIG. 1 are ends of the leak-free fluid channels 200, and function as inlets for the cooling fluid. Meanwhile, although not illustrated in the drawings, a pump is connected to the motor housing 100 through the upper and lower channel ports 210 and 220 to enable forcible flowing of the cooling fluid. Therefore, for example, the operation of the pump is controlled by a controller, and fluid characteristics and a cooling function of the cooling fluid may be considered for flow rate regulation of the cooling fluid. Here, it is a matter of course that the controller can control a flow rate and a flow velocity of the cooling fluid by controlling the pump according to a preset setting value or controlling the pump via a temperature or the like of the cooling fluid through a temperature sensor that detects the temperature of the cooling fluid.

Here, the cooling fluid may flow into the upper channel port 210 and flow out of the lower channel port 220. Conversely, the cooling fluid may flow into the lower channel port 220 and flow out of the upper channel port 210.

Meanwhile, the cooling fluid may include various fluids used for a cooling purpose, such as a coolant, a well-known refrigerant, air, etc. For example, a coolant that is easy handled and is excellent in cooling efficiency and fluidity may be used as the cooling fluid.

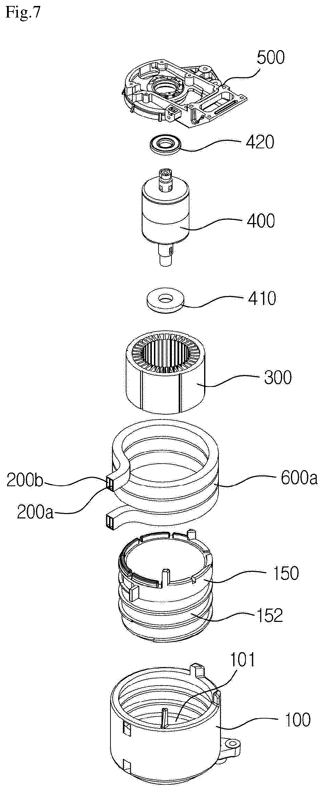

FIG. 7 is an exploded perspective view illustrating components used to manufacture the motor housing illustrated in FIG. 1.

As illustrated in FIG. 7 by way of example, a stator 300, a lower rotor bearing 410, a rotor 400, and a upper rotor bearing 420 are inserted into the motor housing 100 according to the above embodiment, and a cover 500 is fixed to an upper surface of the motor housing 100. Thereby, the entire motor housing can be finished.

According to the embodiment, the fluid channels 200 of the motor housing 100 may have a quadrilateral cross section. This is merely one example, and it goes without saying that a structure and shape of the motor housing 100 may be various formed without departing the claims of the present invention and their equivalents.

### <High-pressure die casting core for manufacturing motor housing>

A high-pressure die casting process may be used to form the fluid channels 200 in the motor housing 100, and a component inserted into a die in order to make an inner shape of a casting when die casting is performed is referred to as a core. The core should have adequate mechanical strength to maintain a shape thereof against heat and pressure of molten metal (melt) during casting, and should be relatively easily broken to make it possible to be easily removed from a cast after casting. Sand, a thermosetting resin (e.g., foam), and salt are generally used as a material for this core.

In the related art, such a core whose interior is in an empty state has a problem in that the core may be deformed under pressure of the melt during high-pressure casting. To solve this problem, a high-pressure die casting core including a filler layer inside a body of the core is generally used.

Referring to FIG. 7 again, an exemplary core 600a used in the high-pressure die casting process of manufacturing the motor housing according to the present invention is a meal pipe including the leak-free fluid channels 200 to be embedded in a helical shape in a longitudinal direction of the motor housing 100. The leak-free fluid channels 200 are filled with a filler, and in the case where the leak-free fluid channels 200 are configured in a dual manner, the channels 200a and 200b thereof may be filled with a filler.

Examples of the filler include salt, magnesia, steel mesh, and so on, but are not limited thereto. Sand, ceramic beads, and an organic compound may also be used. These materials may be used independently or in combination thereof.

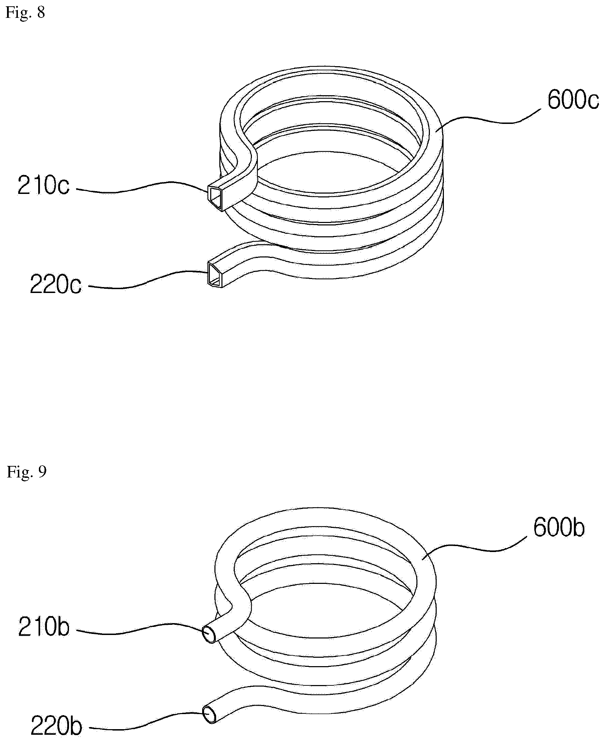

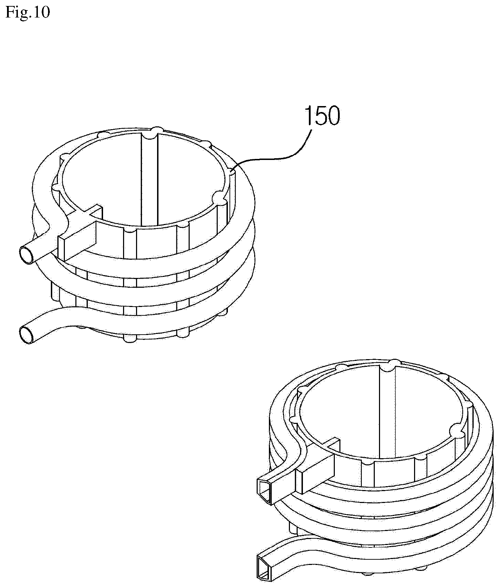

The high-pressure die casting core is not limited to the above. FIG. 8 is a perspective view illustrating an example different from the above example of the high-pressure die casting core used for the motor housing of the present invention. FIG. 9 is a perspective view illustrating another example of the high-pressure die casting core used for the motor housing of the present invention. FIG. 10 is a view illustrating an example of a shape of an inner support 150 used to manufacture a motor housing according to another embodiment of the present invention.

First, a core 600c illustrated in FIG. 8 shows an example in which a section of a single fluid channel formed by the core is quadrilateral, and includes an upper channel port 210c and a lower channel port 220c.

Next, a core 600b illustrated in FIG. 9 shows an example in which a section of a single fluid channel formed by the core is circular, and includes an upper channel port 210b and a lower channel port 220b.

The high-pressure die casting cores 600a, 600b, and 600c used in the present invention are preferably provided continuously with no seams.

The filler in this high-pressure die casting core is preferably a powder or granule type material in which a change in physical properties is hardly exhibited despite a change in temperature until a specific range above room temperature.

### <Method of manufacturing motor housing using high-pressure die casting process>

A method of manufacturing a motor housing according to the present invention using a high-pressure die casting process (hereinafter referred to as a "motor housing manufacturing method") will be described below.

Referring to FIG. 7 again, a motor housing manufacturing method according to the present invention includes, first, a first step of integrally assembling the high-pressure die casting core 600a, which includes the leak-free fluid channels 200 to be embedded in a helical shape in a longitudinal direction of the motor housing 100, and the inner support 150. The inner support 150, which can be previously cast and formed or formed in a manner of post-processing, for instance, a seating recess 152 after extrusion molding has a circular structure (may be deformed to fit shapes of a stator and a motor) so as to accommodate the stator 300, and is embedded (integrated) in the motor housing 100 via a high-pressure die casting process to be described below.

For reference, the helical seating recess 152 for guiding winding of the high-pressure die casting core 600a is formed in an outer surface of the inner support 150. The inner support 150 having strong rigidity is preferably used to enable the high-pressure die casting core 600a to be molded while being stably positioned without deformation of a shape caused by high pressure. Further, by the use of the inner support 150, pore defects that may occur on a contact surface of the stator 300 can be minimized. The seating recess 152 may be formed via post-processing after the inner support 150 is molded using a high-density extrudate to minimize the pore defects, and the inner support 150 may be formed using melt having high density. Of course, as illustrated in FIG. 10, an extruded extrudate itself may be used as the inner support 150. In this case, the post-processing of the seating recess 152 is unnecessary.

Meanwhile, the leak-free fluid channels 200a and 200b are filled with a filler in the first step. In the related art disclosed in Japanese Patent No. 5613453 (Patent Document 1), there is a need for a binder-containing sand forming process of obtaining binder-containing sand by agitating sand that is put into a metal pipe and a binder that binds the sand and returns from a bound state to an unbound state at a desired temperature. According to the present invention, there is an advantage from a process aspect in that a filler (a support material) and a binder are not necessarily agitated. Further, according to Patent Document 1, after the binder-containing sand is filled in a metal pipe and hardened, the metal pipe is sealed with caps, thereby obtaining a binder filled core. According to the present invention, since a core is obtained by hardening only a filler at opposite ends of a metal pipe using a binder, the metal pipe may not be sealed with the caps.

That is, in the high-pressure die casting process used in the present invention, the binder is not necessarily agitated, and the opposite ends of the metal pipe are not necessarily sealed with the caps.

Next, the motor housing manufacturing method according to the present invention includes a second step of filling an outer side of the motor housing 100, i.e. an inside of a motor housing casting die (not illustrated) for forming the motor housing, with molten metal so as to enclose an outer circumferential surface of the high-pressure die casting core 600a, and forming the motor housing 100 in which the leak-free fluid channels 200 are embedded. The motor housing 100 is as illustrated in FIG. 7 by way of example.

To be more specific, after the high-pressure die casting core 600a integrated into the inner support 150 is inserted and disposed in the motor housing casting die, and melt is filled between an inner surface of the motor housing casting die and the high-pressure die casting core 600a integrated into the inner support 150 under a high-pressure condition. Thereby, the motor housing 100 in which the leak-free fluid channels are embedded can be formed.

Meanwhile, prior to the above-described second step, a step of pre-heating the high-pressure die casting core 600a to prevent cracks from being caused by thermal expansion between the molten metal and the high-pressure die casting core 600a may be further added.

After the second step is performed, the filler may be removed for complete formation of the fluid channels 200.

Next, the motor housing manufacturing method according to the present invention may further include a third step of inserting the stator 300 and the rotor 400 into the motor housing 100.

In the related art disclosed in Korean Patent Publication No. 10-2016-0047809 (Patent Document 2), a process of inserting and disposing a stator core in a motor housing casting die is required. According to the present invention, there is an advantage in that the stator can be easily assembled after die casting of the motor housing according to the present invention. Therefore, according to Patent Document 2, another core is disposed between an inner surface of the motor housing casting die and an outer surface of the stator core. In contrast, according to the present invention, the melt is injected between the inner surface of the motor housing casting die and the inner support, and thereby the high-pressure die casting core inside the inner surface of the motor housing casting die, and the inner support can be integrated and embedded in the motor housing.

In the third step, the lower and upper rotor bearings 410 and 420 are disposed on lower and upper sides of the rotor 400 to be able to assist supporting of the rotor. This bearing configuration is as well-known to a person having ordinary skill in the art.

Further, for example, the stator 300 may be inserted by a shrinkage fitting process.

After the third step, the motor housing manufacturing method according to the present invention may further include a fourth step of fixing the cover 500 to an upper surface of the motor housing 100 such that the stator 300 and the rotor 400 are accommodated in the motor housing 100.

In all the above embodiments of the present invention, the motor housing according to the embodiments of the present invention has an advantage that cooling performance can be maintained and improved.

Further, in the motor housing according to the embodiments of the present invention, a unique component of the present invention which is not disclosed in the related art, for instance, an extruded pipe, is processed, and is used as the die casting core. Thereby, because the extruded pipe is subjected to insert-injection into the die of the motor housing, production time and manufacturing costs can be reduced.

Furthermore, in the motor housing according to the embodiments of the present invention, because the high-pressure die casting process is performed after the helical high-pressure die casting core is integrally wound around the outer surface of the inner support 150 in which the stator can be accommodated, there is an advantage in that helical fluid channels are stably molded. Moreover, because the inner support 150 having high density is used, pore defects that may occur on the inner surface of the inner support 150 can be minimized. As a result, there is an advantage in which a material defect rate of the motor housing can be remarkably reduced.

The above exemplary embodiments of the present invention are merely disclosed for illustrative purposes, and various corrections, alterations, and additions are available to a person having ordinary skill in the art without departing the idea and scope of the present invention. These corrections, alterations, and additions may be regarded as falling within the claims of the present invention.

### [Description of reference signs]

100: Motor housing
101: Accommodation space
150: Inner support
200: Leak-free fluid channel
200a: Inner channel
200b: Outer channel
210, 210b, 210c: Upper channel port
220, 220b, 220c: Lower channel port
300: Stator
400: Rotor
410: Lower rotor bearing
420: Upper rotor bearing
500: Cover
600a, 600b, 600c: High-pressure die casting core

## Claims

1. A motor housing comprising:
an inner support having a circular structure for accommodating a stator therein; and
a high-pressure die casting core that includes one or more leak-free fluid channels and is integrally wound around an outer surface of the inner support in a helical shape.

2. A motor housing comprising one or more leak-free fluid channels,
wherein an inner support, which has a circular structure for accommodating a stator in the inner support and into which a high-pressure die casting core including the leak-free fluid channels in an outer surface of the inner support in a helical shape is integrated, is embedded, and at least one of the leak-free fluid channels is provided as a cooling fluid channel through which a cooling fluid flows.

3. The motor housing according to claim 1 or 2, wherein a helical seating recess for guiding the winding of the high-pressure die casting core is further formed in the outer surface of the inner support.

4. The motor housing according to claim 1 or 2, wherein the stator and a rotor are inserted into the inner support, and a cover is fixed to an upper surface of the motor housing.

5. The motor housing according to claim 1 or 2, wherein the inner support is previously manufactured by casting, extrusion molding, or processing after extrusion molding.

6. The motor housing according to claim 1 or 2, wherein the inner support into which the die casting core is integrated is embedded by a high-pressure die casting process.
